# EUROPEAN PATENT APPLICATION

(11) **EP 0 867 839 A2**
(43) Date of publication of application: **30.09.1998**
(21) Application number: 98105399.4
(22) Date of filing: 25.03.1998
(51) Int. Cl.: G06T 15/10

(54) **Method for compositing an image of a real object with a virtual scene**

(30) Priority: 27.03.1997 US 828787
(71) Applicant: RT-Set Ltd., Herzelia 46100 (IL)
(72) Inventor: Tzidon, Aviv, Azur (IL); Tzidon, Dekel, 12430 Ramat Hagolan (IL); Yakir, Ran, 45200 Hod Hasharon (IL)
(74) Representative: Modiano, Guido, Dr.-Ing.

(57) **Abstract**

An improved video polygon method for combining an image of an object with a virtual scene to produce a composite image with respect to a virtual eyepoint. Two ways are provided to retain realism in the composite image. The motion of the real camera that acquires the image is coordinated with the motion of the virtual eyepoint within the virtual scene. For example, to preserve resolution as the virtual eyepoint approaches the transparent polygon on which the image is textured, the real camera is moved closer to the object. To minimize the flat appearance of the textured transparent polygon as the virtual eyepoint moves azimuthally, the transparent polygon is rotated in tandem with the azimuthal motion of the virtual eyepoint. The coordinates of the eyepoint may be provided to the computer using a 6D mouse such as a virtual camera.

## Description

### FIELD AND BACKGROUND OF THE INVENTION

The present invention relates to video production and, more particularly, to a method of realistically including an image of a real object in a rendered image of a three dimensional virtual scene.

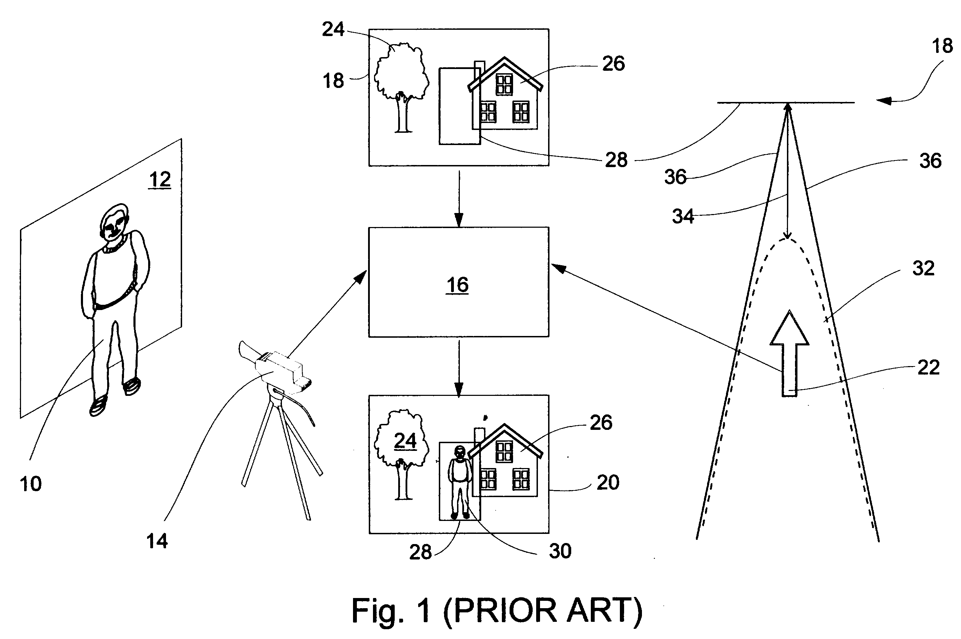

The prior art of "video polygon" is illustrated schematically in Figure 1. On the left side of Figure 1 is a schematic perspective view of a video studio, showing an object **10** (in this case a live actor) being photographed in front of a screen **12** by a stationary video camera **14**. Screen **12** is colored uniformly with a chroma-key color, conventionally a particular shade of blue. A virtual scene **18**, including scene components such as a tree **24** and a house **26**, and also including a transparent polygon **28**, is stored digitally in the memory of a computer **16**. Transparent polygon **28** may be of any shape, but conventionally, transparent polygon **28** is a rectangle whose sides are parallel to the coordinate axes of virtual scene **18**, as shown, and that exactly matches the field of view of camera **14** at the distance of object **10** from camera **14**. Camera **14** acquires a digital image of object **10** against the background of screen **12**. This image, along with the eyepoint of camera **14**, is transferred to computer **16**, a process symbolized in Figure 1 by the arrow from camera **14** to computer **16**. Computer **16** removes from this image all pixels possessing the chroma-key color, and applies the remaining pixels to transparent polygon **28** as a texture **30**, to produce a composite image **20** that combines virtual scene **18** with the real image acquired by camera **14**.

The right side of Figure 1 is a partial plan view of virtual scene **18**, showing transparent polygon **28** relative to a virtual eyepoint from which composite image **20** is rendered. This virtual eyepoint is represented in Figure 1 as a double arrow **22**. The location of virtual eyepoint **22** relative to composite image **20** is provided to computer **16** by external means, as symbolized in Figure 1 by an arrow from virtual eyepoint **22** to computer **16**. The initial location of virtual eyepoint **22** relative to transparent polygon **28** is the same as the location of the eyepoint of camera **14** relative to object **10**, so that object **10** is placed correctly and realistically inside virtual scene **18**. Subsequently, virtual eyepoint **22** may be moved within virtual scene **18** relative to polygon **28**, so that composite image **20** may be rendered from other eyepoints without moving camera **14** within the studio. In this manner, it is possible to shoot a scene such as the opening scene of *The Sound of Music*, in which the camera, starting from a considerable distance away, zooms in on Maria singing and dancing on a meadow in the Austrian Alps, without the expense of shooting on location.

The still earlier prior art process that was replaced by video polygon is conventional chroma-key compositing. In chroma-key compositing the digital image of object **10** is composited directly onto virtual scene **18** without regard to the proper placement of object **10** relative to the scene components, and with a consequent loss of realism. The increased realism and flexibility of the video polygon method over chroma-key compositing comes at a price, of course. In video polygon, texture **30** and transparent polygon **28** are stored digitally in the database of computer **16**, along with the other scene components. It follows that video polygon is more compute-intensive than chroma-key compositing.

Although the video polygon method has brought unprecedented flexibility to the video production process, it suffers from certain limitations on the positioning of virtual eyepoint **22** relative to transparent polygon **28**. There is a region of the composite virtual scene, referred to herein as the "envelope of realism", such that composite image **20** looks realistic only as long as eyepoint **22** remains in the interior of this region. The boundary of the envelope of realism is represented in Figure 1 by a dashed line **32**, and eyepoint **22** is shown in the interior of the envelope of realism. If eyepoint **22** crosses boundary **32**, then composite image **20** starts to look unrealistic, for one of two reasons. The first reason is that the resolution of the acquired image of object **10** as texture **30** on transparent polygon **28** is fixed by the eyepoint of camera **14**. If virtual eyepoint **22** moves closer to transparent polygon **28** than a certain radial distance, represented in Figure 1 by a double-headed arrow **34**, then object **10** is rendered with less than realistic resolution, and appears blurred or blocky. The second reason is that transparent polygon **28** with superposed texture **30** is a two-dimensional object. If virtual eyepoint moves azimuthally relative to transparent polygon **28** outside of a range of angles represented in Figure 1 by asymptotes **36** of boundary **32**, transparent polygon **28** with superposed texture **30** looks like a cutout of a two-dimensional picture of object **10.**

There is thus a widely recognized need for, and it would be highly advantageous to have, a video polygon method that is free of the virtual eyepoint limitations of the prior art method.

### SUMMARY OF THE INVENTION

According to the present invention there is provided an improved method of combining an image of an object with a virtual scene to produce a composite image with respect to a virtual eyepoint having a field of view, the method being of the type in which the image is acquired using a real camera, in which the acquired image is textured onto a transparent polygon at a virtual location in the virtual scene, and in which the virtual scene has an envelope of realism having an interior and a boundary, the improvement comprising the steps of: (a) moving the virtual eyepoint from the interior of the envelope of realism at least as far as the boundary of the envelope of realism; and (b) compensating for the moving of the virtual eyepoint at least as far as the boundary of the envelope of realism.

According to the present invention there is provided an improved method of combining an image of an object with a virtual scene to produce a composite image with respect to a virtual eyepoint, the method being of the type in which the image is acquired using a camera in a studio having a boundary, the improvement comprising the steps of: (a) moving the camera to a first real position at the boundary; and (b) moving the virtual eyepoint to a first virtual position equivalent to a second real position outside the boundary.

According to the present invention there is provided an improved method of combining an image of an object with a virtual scene to produce a composite image with respect to a virtual eyepoint having a field of view, the method being of the type in which the image is textured onto a transparent polygon in the virtual scene, the improvement comprising the steps of: (a) removing the transparent polygon from the virtual scene; and (b) compositing the image with the virtual scene.

The scope of the present invention includes two methods for compensating for the loss of realism when virtual eyepoint **22** moves outside of boundary **32**. The first method compensates for loss of realism upon close approach of eyepoint **22** to transparent polygon **28**. Camera **14** is moved in coordination with virtual eyepoint **22**. If virtual eyepoint **22** approaches transparent polygon **28** closer than distance **34**, camera **14** moves closer to object **10** and acquires a new image of object **10** with higher resolution. Transparent polygon **28** is textured with a texture **30** of correspondingly higher resolution, restoring realism to composite image **20**. The second method compensates for loss of realism upon moving azimuthally outside of asymptotes **36**, in a manner described in more detail below.

Just as camera **14** may be moved within the studio in response to the motion of virtual eyepoint **22** within virtual scene **18**, so virtual eyepoint **22** may be moved within virtual scene **18** in response to the motion of camera **14** within the studio. Thus, if camera **14**, while receding from object **10**, encounters a boundary of the studio, such as a wall, virtual eyepoint **22** can take over, starting from a position in virtual scene **18** relative to transparent polygon **28** that is equivalent to the last attainable position of camera **14** in the studio relative to object **10**, and continuing to recede from transparent polygon **18**.

### BRIEF DESCRIPTION OF THE DRAWINGS

The invention is herein described, by way of example only, with reference to the accompanying drawings, wherein:
FIG. 1 (prior art) is a schematic depiction of the video polygon method;
FIG. 2 is a schematic plan view of an implementation of the present invention;
FIG. 3 illustrates the compensation for the loss of realism, according to the present invention, as the virtual eyepoint moves azimuthally.

### DESCRIPTION OF THE PREFERRED EMBODIMENTS

The present invention is of a method for realistically including an image of a real object in a rendered image of a virtual scene. Specifically, the present invention is an improved video polygon method.

The principles and operation of video polygon according to the present invention may be better understood with reference to the drawings and the accompanying description.

In principle, virtual eyepoint **22** could be provided to computer **16** by entering the coordinates of the eyepoint using the keyboard of computer **16**. It is more convenient, however, to use a 6DOF (6 degrees of freedom) analog input device such as a spaceball (trademark of Spacetec, Inc.) or a virtual camera to input the three position coordinates (x,y,z) and the three orientation coordinates (pan, tilt, roll). A virtual camera is a real camera **14** with the camera mechanism itself removed. In other words, a virtual camera is a camera housing with a viewfinder and a tracking system component, such as the magnetic tracker receiver described in PCT Publication WO 96/32697, to Loftus et al., that enables a tracking system to provide computer **16** with real time measurements of the position and orientation of input device **40**.

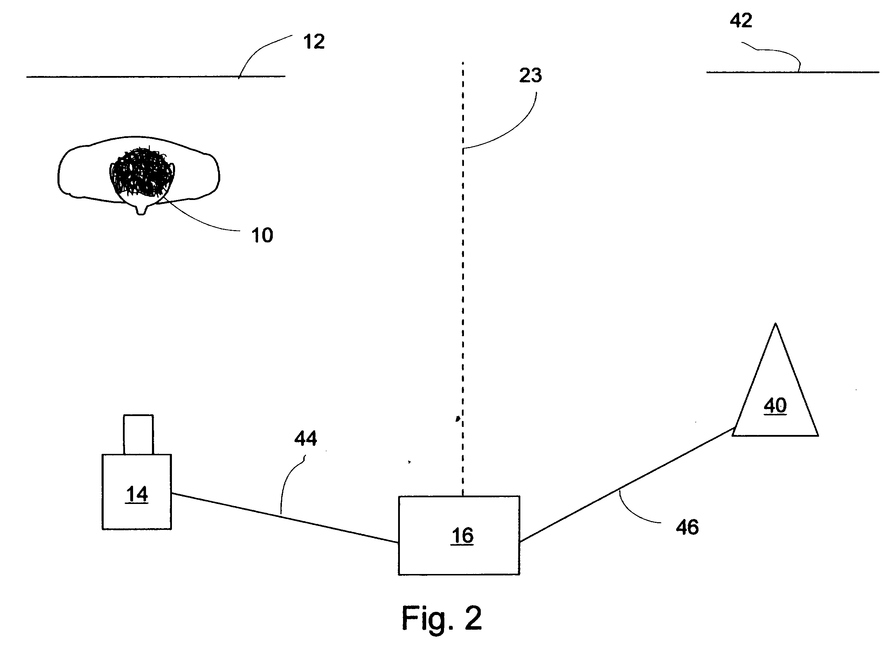

Referring now to the drawings, Figure 2 is a schematic plan view of a real studio (to the left of the dashed line) and a simulated studio (to the right of the dashed line) wherein the present invention is implemented. In the real studio, camera **14** acquires an image of object **10** against the background of screen **12**, and transmits that image to computer **16**, using a data link **44**. In the simulated studio, a virtual camera **40** transmits its location and orientation, relative to a reference polygon **42** (seen edge-on in Figure 2), to computer **16**, using a data link **46**. A technician aims virtual camera **40** at a reference polygon **42**, in the simulated studio, that represents the position and orientation of transparent polygon **28** in the composite scene. In response, computer **16** renders image **20** of the composite scene from an eyepoint having the same position and orientation relative to polygon **28** as virtual camera **40** has relative to polygon **42**.

If the input device is a more conventional analog input device, such as a pair of spaceballs as discussed above, the technician monitors the state of virtual eyepoint **22** by direct observation of composite image **20** on a video monitor.

As noted above, one potential source of a lack of visual realism in composite image **20** is loss of resolution in image **38** as virtual eyepoint **22** approaches transparent polygon **28**. The present invention alleviates this problem by the coordination of the movements of camera **14** and the input device: if virtual eyepoint **22** approaches within distance **34** of transparent polygon **28**, camera **14** is moved closer to object **10** to increase the resolution of image **38** and thereby move the envelope of realism closer to transparent polygon **28**. To ensure that the apex of boundary **32** is always just ahead of virtual eyepoint **22**, the robotics system moves camera **14** to keep the ratio of the real distance, between camera **14** and object **10**, to the virtual distance, between virtual eyepoint **22** and transparent polygon **28**, substantially constant.

As was noted above, conventionally, the sides of transparent polygon **28** exactly match the field of view of (initially stationary) camera **14**. When camera **14** approaches object **10**, the part of the vicinity of object **10** subtended by the field of view of camera **14** shrinks, and transparent polygon **28** shrinks accordingly relative to the other objects in virtual scene **18**. Correspondingly, texture **30** occupies more of the area of transparent polygon **28**. If camera **14** comes "too close" to object **10**, part of object **10** may be cut off. Depending on the nature of object **10**, it may be necessary, at certain distances of camera **14** from object **10**, to require that composite image **20**, whose boundary is the field of view of virtual eyepoint **22**, be entirely within transparent polygon **28**, so that the rendition of object **10** in composite image **20** is not unnaturally truncated. Note that under these circumstances, with composite image **20** entirely within the field of view of camera **14**, while camera **14** and virtual eyepoint **22** are stationary, computer **16** may temporarily remove transparent polygon **28** from virtual scene **18** and composite the image of object **10** with virtual scene **18** using the computationally less intensive prior art technology of chroma-key compositing instead of the relatively computationally intensive video polygon method.

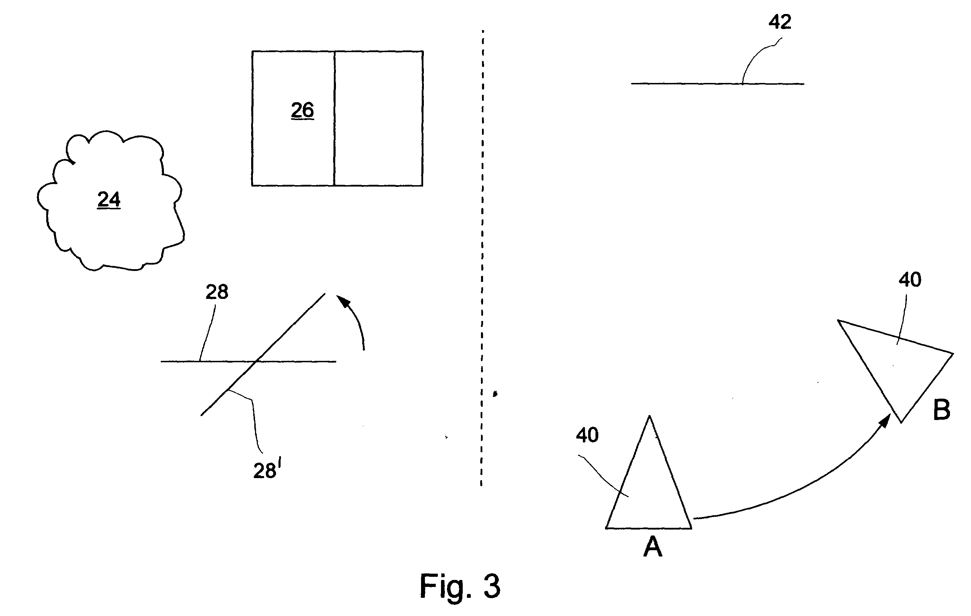

The other source noted above of a possible loss of visual realism in composite image **20** is the fact that textured polygon **28** is actually a two-dimensional picture of object **10**, and appears as such in composite image **20** when virtual eyepoint **22** moves azimuthally beyond boundary **32**. Figure 3 illustrates a method of compensating for this, according to the present invention. On the right side of Figure 3 (to the right of the dashed line) is a plan view of the simulated studio. Input device **40** is shown orbiting polygon **42**, i.e., moving from position **A** to position **B** relative to polygon **42** along an arc of a circle. On the left side of Figure 3 (to the left of the dashed line) is a plan view of virtual scene **18**. Computer **16** rotates polygon **28** about the vertical axis of symmetry of polygon **28** in tandem with the azimuthal motion of input device **40**, so that polygon **28** remains perpendicular to a line connecting polygon **28** to virtual eyepoint **22**. If object **10** is a live actor, actor **10** pretends to turn in place, to preserve the sense of realism. If object **10** is inanimate, object **10** may be mounted on a platform that rotates opposite to the orbital motion of input device **40**, so that image **30** always is textured onto polygon **28** from the correct angle.

While the invention has been described with respect to a limited number of embodiments, it will be appreciated that many variations, modifications and other applications of the invention may be made.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. An improved method of combining an image of an object with a virtual scene to produce a composite image with respect to a virtual eyepoint having a field of view, the method being of the type in which the image is acquired using a real camera, in which the acquired image is textured onto a transparent polygon at a virtual location in the virtual scene, and in which the virtual scene has an envelope of realism having an interior and a boundary, the improvement comprising the steps of:
(a) moving the virtual eyepoint from the interior of the envelope of realism at least as far as the boundary of the envelope of realism; and
(b) compensating for said moving of the virtual eyepoint at least as far as the boundary of the envelope of realism.

2. The method of claim 1, wherein said moving of the virtual eyepoint is effected using a 6DOF device.

3. The method of claim 2, wherein said 6DOF device includes a virtual camera.

4. The method of claim 1, wherein said moving of the virtual eyepoint is effected radially towards the transparent polygon, and wherein said compensating is effected by moving the real camera radially towards the object.

5. The method of claim 4, wherein said moving of the real camera is initiated when the virtual eyepoint substantially reaches the boundary of the envelope of realism.

6. The method of claim 5, wherein said moving of the real camera is coordinated with said moving of the virtual eyepoint.

7. The method of claim 4, further comprising the steps of:
(c) removing the transparent polygon from the virtual scene; and
(d) compositing the image with the virtual scene.

8. The method of claim 1, wherein said moving of the virtual eyepoint is effected azimuthally with respect to the transparent polygon, in a certain angular direction, beyond the boundary of the envelope of realism.

9. The method of claim 8, wherein said moving of the virtual eyepoint is effected by orbiting a real location, corresponding to the virtual location of the transparent polygon, using a 6DOF device.

10. The method of claim 8, further comprising the step of:
(c) rotating the transparent polygon in said angular direction.

11. The method of claim 10, wherein said azimuthal moving of the virtual eyepoint and said rotating of the polygon are effected in tandem.

12. The method of claim 8, further comprising the step of:
(c) rotating the object opposite to said angular direction.

13. The method of claim 8, further comprising the steps of:
(c) providing a live actor as the object; and
(d) pretending to turn in said angular direction, by said actor.

14. An improved method of combining an image of an object with a virtual scene to produce a composite image with respect to a virtual eyepoint, the method being of the type in which the image is acquired using a camera in a studio having a boundary, the improvement comprising the steps of:
(a) moving the camera to a first real position at the boundary; and
(b) moving the virtual eyepoint to a first virtual position equivalent to a second real position outside the boundary.

15. The method of claim 14, wherein said moving of the virtual eyepoint is begun from a second virtual position equivalent to said first real position.

16. An improved method of combining an image of an object with a virtual scene to produce a composite image with respect to a virtual eyepoint having a field of view, the method being of the type in which the image is textured onto a transparent polygon in the virtual scene, the improvement comprising the steps of:
(a) removing the transparent polygon from the virtual scene; and
(b) compositing the image with the virtual scene.
